# EUROPÄISCHE PATENTANMELDUNG

(11) **EP 0 839 874 A2**
(43) Veröffentlichungstag der Anmeldung: **06.05.1998**
(21) Anmeldenummer: 97118215.9
(22) Anmeldetag: 21.10.1997
(51) Int. Cl.: C09C 1/00, C09C 3/06, C08K 3/00, C09D 7/12, C09D 11/00

(54) **Bismutvanadatpigmente**

(30) Priorität: 04.11.1996 DE 19645314
(71) Anmelder: BASF AKTIENGESELLSCHAFT, 67056 Ludwigshafen (DE)
(72) Erfinder: Adel, Jörg, Dr., 67071 Ludwigshafen (DE); Camara, Boubacar, Dr., 71549 Auenwald (DE); Mronga, Norbert, Dr., 69221 Dossenheim (DE)

(57) **Zusammenfassung**

Bismutvanadatpigmente der Formel (Bi₄V₂O₁₁)₁₋ₓ·(BiVO₄)ₓ, wobei 0 ≤ x < 0,9 bedeutet, die zusätzlich 0 bis 0,5 Gew.-% Phosphor in Form von Bismutphosphat enthalten und durch einen CIELAB-Farbwinkel von 64 bis 91°, ein Chroma von 72 bis 95 und eine Helligkeit ≥ 62 (Meßwinkel 45°, Normlichtart D65) gekennzeichnet sind.

## Beschreibung

Die vorliegende Erfindung betrifft Bismutvanadatpigmente der Formel (Bi₄V₂O₁₁)₁₋ₓ·(BiVO₄)ₓ, wobei 0 ≤ x < 0,9 bedeutet, die zusätzlich 0 bis 0,5 Gew.-% Phosphor in Form von Bismutphosphat enthalten und durch einen CIELAB-Farbwinkel von 64 bis 91°, ein Chroma von 72 bis 95 und eine Helligkeit ≥ 62 (Meßwinkel 45°, Normlichtart D65) gekennzeichnet sind.

Weiterhin betrifft die Erfindung die Herstellung dieser Pigmente und ihre Verwendung zum Einfärben von polymeren Systemen, insbesondere von Lacken, Druckfarben und Kunststoffen.

Schließlich betrifft die Erfindung auch farbige Zubereitungen, welche ein färbbares Material und diese Bismutvanadatpigmente als farbgebendes Pigment enthalten.

Bekanntermaßen wird versucht, die als gelbe bis orangerote Pigmente eingesetzten Bleichromate durch bleifreie Pigmente zu ersetzen. Im gelben Farbtonbereich ist dies durch die Verwendung von Bismutvanadatpigmenten gelungen. Ein zufriedenstellender Ersatz für die rotstichig gelben bis orangeroten Bleichromat/molybdatpigmente wurde, abgesehen von einigen Bismutoxid/Chromoxid-Mischphasenpigmenten (DE-A-15 92 388, DE-A-33 15 849 und DE-A-40 02 943), die wegen des Gehalts an Chrom(VI) toxikologisch ebenfalls bedenklich sind, nicht gefunden.

Nach den in Russian Journal of Inorganic Chemistry, 32, 145-146 (1987) veröffentlichten differenzthermoanalytischen Untersuchungen existieren im System Bismutoxid/Vanadiumoxid eine Reihe von Bismutvanadaten mit höherem Bismutgehalt als BiVO₄. Eines dieser Vanadate ist Bi₄V₂O₁₁, das als braune Verbindung beschrieben wird. Auch bei der in Acta Cryst. C48, 1176-1179 (1992) beschriebenen Kristallstrukturanalyse wurde ein rotbrauner Bi₄V₂O₁₁-Einkristall verwendet.

Der Erfindung lag die Aufgabe zugrunde, Pigmente für den Farbtonbereich von rotstichig gelb bis orange bereitzustellen, welche keine toxischen Metalle enthalten und in wirtschaftlicher Weise hergestellt werden können.

Demgemäß wurden Bismutvanadatpigmente der Zusammensetzung (Bi₄V₂O₁₁)₁₋ₓ·(BiVO₄)ₓ, wobei 0 ≤ x < 0,9 bedeutet, gefunden, welche zusätzlich 0 bis 0,5 Gew.-% Phosphor in Form von Bismutphosphat enthalten und durch einen CIELAB-Farbwinkel von 64 bis 91°, ein Chroma von 72 bis 95 und eine Helligkeit ≥ 62 (Meßwinkel 45°, Normlichtart D65) gekennzeichnet sind.

Außerdem wurde ein Verfahren zur Herstellung dieser Bismutvanadatpigmente gefunden, welches dadurch gekennzeichnet ist, daß man ein homogenes Gemisch von Bismutoxid und Vanadiumoxid 2 bis 12 h bei 600 bis 900°C calciniert und das Calcinierungsprodukt langsam auf Raumtemperatur abkühlt, wobei das Abkühlen bis auf etwa 200°C in mindestens 6 bis 20 h erfolgen soll, einer Mahlung unterwirft und gewünschtenfalls anschließend in wäßriger Suspension mit Peroxoverbindungen behandelt.

Weiterhin wurde ein Verfahren zur Herstellung dieser Bismutvanadatpigmente gefunden, welches dadurch gekennzeichnet ist, daß man eine saure Bismutsalzlösung in Gegenwart von gelöstem Phosphat auf bis zu 105°C erhitzt, zunächst 200 bis 400 mol-%, bezogen auf Bismut, Alkalimetallhydroxid in Form einer wäßrigen Lösung und dann eine Vanadatlösung zugibt, nach beendeter Fällung den pH-Wert der Mischung auf 2 bis 6 einstellt, die Mischung 0,5 bis 5 h rührt und danach das ausgefällte Produkt isoliert, salzfrei wäscht, gewünschtenfalls trocknet, mahlt, 0,5 bis 3 h bei 500 bis 800°C calciniert, langsam auf Raumtemperatur abkühlt, wobei das Abkühlen bis auf etwa 200°C in nicht weniger als 6 h erfolgen soll, erneut mahlt und gewünschtenfalls anschließend in wäßriger Suspension mit Peroxoverbindungen behandelt.

Schließlich wurde ein Verfahren zur Herstellung dieser Bismutvanadatpigmenten gefunden, welches dadurch gekennzeichnet ist, daß man eine saure Bismutsalzlösung, eine Vanadatlösung und eine Phosphatlösung gleichzeitig in auf bis zu 100°C erhitztes Wasser gibt, den pH-Wert der Mischung dabei mit Alkalimetallhydroxid bei 0,8 bis 3 hält, nach beendeter Fällung den pH-Wert der Mischung auf 2 bis 6 einstellt, die Mischung 0,5 bis 5 h rührt und danach das ausgefällte Produkt isoliert, salzfrei wäscht, gewünschtenfalls trocknet, mahlt, 0,5 bis 3 h bei 500 bis 800°C calciniert, langsam auf Raumtemperatur abkühlt, wobei das Abkühlen bis auf etwa 200°C in nicht weniger als 6 h erfolgen soll, erneut mahlt und gewünschtenfalls anschließend in wäßriger Suspension mit Peroxoverbindungen behandelt.

Nicht zuletzt wurde die Verwendung dieser Bismutvanadatpigmente zum Einfärben von polymeren Systemen, insbesondere von Lacken, Druckfarben und Kunststoffen gefunden.

Die erfindungsgemäßen Bismutvanadatpigmente weisen die Formel (Bi₄V₂O₁₁)₁₋ₓ·(BiVO₄)ₓ, wobei 0 ≤ x < 0,9 bedeutet, auf, d.h., es liegen homogene physikalische Mischungen von Bi₄V₂O₁₁ und BiVO₄ bis hin zu "reinem" Bi₄V₂O₁₁ vor. Sie können zusätzlich bis zu 0,5 Gew.-% (bevorzugt 0,05 bis 0,4 Gew.-%, besonders bevorzugt um 0,3 Gew.-%) Phosphor in Form von eingebautem Bismutphosphat enthalten, x beträgt dann vorzugsweise 0,2 bis 0,8.

Die erfindungsgemäßen Bismutvanadatpigmente zeichnen sich durch vorteilhafte CIELAB-Farbwerte wie einen Farbwinkel von 64 bis 91° ein Chroma von 72 bis 95 und eine Helligkeit ≥ 62 aus (Meßwinkel 45°, Normlichtart D65), wobei sich die Pigmente, die zusätzlich Phosphat enthalten, durch besonders hohe Chromawerte und Farbstärken auszeichnen. Durch Variation ihrer Zusammensetzung kann im Farbtonbereich von rotstichig gelb bis orange gezielt ein Pigment mit dem gewünschten Farbton hergestellt werden. Sie eignen sich daher hervorragend zum Ersatz der unerwünschten Bleichromatpigmente.

Überraschend ist dabei, daß Bi₄V₂O₁₁ in Form eines brillanten Orangepigments erhalten werden kann, da in der Literatur nur braune bis rotbraune Produkte dieser Zusammensetzung beschrieben werden.

Die erfindungsgemäßen Bismutvanadatpigmente können vorteilhaft nach einem der ebenfalls erfindungsgemäßen Verfahren, entweder durch reine Calcinierung (Variante a)) oder durch Kombination eines naßchemischen Fallprozesses und einer Calcinierung (Variante b1) und b2)) hergestellt werden.

Wesentlich bei dem bei allen erfindungsgemäßen Herstellungsverfahren vorgenommenen Calcinierungsschritt ist, daß das Calcinierungsprodukt langsam abgekühlt wird. Der Temperaturbereich von der jeweiligen Calcinierungstemperatur bis etwa 200°C sollte dabei in nicht weniger als 6 h, üblicherweise in 6 bis 20 h, bevorzugt in 10 bis 18 h und besonders bevorzugt in 12 bis 16 h durchschritten werden. Das zweckmäßigerweise weiter bis auf Raumtemperatur abgekühlte Calcinierungsprodukt wird anschließend einer Mahlung unterworfen, um eine für die Anwendung als Pigment geeignete Teilchengröße einzustellen.

Das bei der Variante a) bei der Calcinierung eingesetzte Gemisch von Bismutoxid und Vanadiumoxid wird zweckmäßigerweise durch intensives Mischen der Komponenten im trockenen oder nassen Zustand hergestellt. Günstig ist ein gemeinsames Vermahlen in einer Rührwerkskugelmühle oder in einem Dispergiergerät, z.B. einem Red Devil, unter Zuhilfenahme von Mahlhilfsmitteln. Bevorzugt wird eine Naßmahlung vorgenommen, jedoch ergeben auch trocken gemischte bzw. gemahlene Vorprodukte bei längeren Calcinierungsdauern homogene Produkte mit hohem Chroma.

Zur Steigerung der Qualität des Calcinierungsprodukts (Verbesserung von Homogenität, Chroma und Helligkeit) ist es insbesondere bei Variante a) vorteilhaft, die Calcinierung mindestens einmal, vorzugsweise zweimal, zu unterbrechen und das Gemisch nach schnellem Abkühlen einer Trockenmahlung zu unterziehen. Die für Abkühlen und Mahlen benötigte Zeit ist dabei nicht auf die Calcinierungsdauer anzurechnen.

Geeignete Calcinierungstemperaturen liegen bei Variante a) bei 600 bis 900°C, bevorzugt 700 bis 800°C und besonders bevorzugt 740 bis 780°C. Die Calcinierungsdauer beträgt in der Regel 2 bis 12 h, insbesondere 4 bis 6 h.

Bei den Varianten b1) und b2), bei denen ein Fällungsprodukt calciniert wird, sind Calcinierungstemperaturen von in der Regel 500 bis 800°C, bevorzugt 600 bis 700°C und besonders bevorzugt 620 bis 670°C ausreichend. Auch die Calcinierungsdauer ist üblicherweise kürzer und beträgt im allgemeinen 0,5 bis 3 h, vorzugsweise 1 bis 2 h.

Die Herstellung des Fällungsprodukts kann vorteilhaft nach Variante b1) oder b2) erfolgen.

Bei der Variante b1) geht man verfahrenstechnisch zweckmäßigerweise wie folgt vor:

Man erhitzt eine Mischung aus einer wäßrigen sauren Bismutsalzlösung und gelöstem Phosphat unter Rühren auf in der Regel 80 bis 105°C, vorzugsweise 95 bis 100°C.

Als Bismutsalz eignet sich dabei insbesondere Bismutnitrat, als lösliches Phosphat ist neben Alkalimetallphosphaten und hydrogenphosphaten wie Kalium- und Natriumphosphat vor allem Phosphorsäure geeignet.

Die eingesetzte Phosphatmenge beträgt üblicherweise 2 bis 10 mol-%, bevorzugt 4,5 bis 7,5 mol-%, bezogen auf Bismut.

Unter Beibehaltung der Temperatur gibt man dann langsam (im allgemeinen in 10 bis 60 min) 200 bis 400 mol-%, bevorzugt 300 bis 350 mol-%, Alkalimetallhydroxid, bezogen auf Bismut, zu.

Üblicherweise wird hierbei Natriumhydroxid, insbesondere eine 10 bis 50, vor allem etwa 30 gew.-%ige Natronlauge verwendet.

Anschließend gibt man langsam (üblicherweise in 20 bis 60 min) eine wäßrige Vanadatlösung bevorzugt in einer der gewünschten Stöchiometrie etwa entsprechenden Menge zu, so daß ein Molverhältnis Bismut/Vanadium von vorzugsweise 1,1 bis 1,8:1 erreicht wird.

Geeignete Vanadate sind dabei z.B. Ammonium- und Alkalimetallvanadate wie Kalium- und vor allem Natriumvanadat.

Zur Reifung des Fällprodukts rührt man einige Zeit (im allgemeinen 0,5 bis 3 h) bei der oben genannten Temperatur nach, stellt dann durch weitere Basenzugabe einen pH-Wert von in der Regel 2 bis 6, bevorzugt etwa 3, ein und rührt nochmals etwa 0,5 bis 5 h nach.

Nach Abkühlen auf Raumtemperatur kann man die Isolierung des ausgefällten Produkts wie üblich vornehmen, indem man es abfiltriert, salzfrei wäscht und gewünschtenfalls trocknet.

Vor der Calcinierung nimmt man zweckmäßigerweise eine Mahlung des Fällungsprodukts z.B. in einer Rührwerkskugelmühle vor. Die Mahlung kann trocken oder naß erfolgen, wobei das Kahlen in wäßriger Suspension bevorzugt ist, so daß der vorhergehende Trocknungsschritt entfallen kann.

Bei der Variante b2) geht man bei der Herstellung des Fällungsprodukts verfahrenstechnisch zweckmäßigerweise wie folgt vor:

Man legt Wasser vor, das man vorzugsweise zum Sieden erhitzt (man kann aber auch bei niedrigerer Temperatur bis zu Raumtemperatur arbeiten), und gibt (vorzugsweise unter weiterem Erhitzen) gleichzeitig Bismutsalzlösung, Vanadatlösung und Phosphatlösung langsam zu (Menge und Art der Ausgangsverbindungen entsprechen den Angaben bei Variante b1)), wobei man den pH-Wert der Mischung durch Zugabe von Alkalimetallhydroxid, vorzugsweise Natronlauge, in einem Bereich von etwa 0,8 bis 3 konstant hält.

Die Vervollständigung der Fällung sowie die Isolierung des Fällungsprodukts und seine Mahlung kann analog zu Variante b1) vorgenommen werden.

Die bei allen Verfahrensvarianten auf die Calcinierung folgende Mahlung (bevorzugt ebenfalls eine Naßmahlung in Gegenwart von Wasser) kann z.B. in einer Rührwerkskugelmühle durchgeführt werden, die in der Regel mit 500 bis 1000 Upm betrieben wird. Geeignete Mahlkörper sind z.B. Glaskugeln oder Sandkörner mit einem Durchmesser von jeweils etwa 0,5 bis 2 mm.

Übliche Mahldauern betragen erfindungsgemäß 2 bis 12 h.

Die Isolierung des Mahlprodukts kann nach Abtrennung der Mahlkörper wie üblich durch Abfiltrieren, Waschen mit Wasser und Trocknen erfolgen.

Die auf diese Weise erhaltenen Bismutvanadatpigmente weisen im allgemeinen mittlere Teilchengrößen von 0,5 bis 2 µm, bevorzugt 0,7 bis 1,5 µm, besonders bevorzugt 0,7 bis 1 µm, auf und sind in Abhängigkeit von ihrer Zusammensetzung orange (Bi₄V₂O₁₁) bis rotstichig gelb gefärbt.

Durch die bevorzugt erfolgende zusätzliche erfindungsgemäße Behandlung mit Peroxoverbindungen kann der Farbwinkel der gemahlenen Pigmente weiter verringert (in der Regel um 0,5 bis 2°) sowie ihr Chroma weiter erhöht werden (im allgemeinen um 0,5 bis 3). Auf diese Weise können besonders rotstichige Bismutvanadatpigmente mit hohem Chroma erhalten werden. Die mittlere Teilchengröße der Pigmente ändert sich bei dieser Behandlung üblicherweise nicht.

Geeignete Peroxoverbindungen sind zum Beispiel Peroxosalze von Alkalimetallen wie Natrium und Kalium, insbesondere Natriumperborat und Natriumpercarbonat, und vor allem Wasserstoffperoxid.

Bei Verwendung des bevorzugten Oxidationsmittels Wasserstoffperoxid geht man zweckmäßigerweise so vor, daß man eine Suspension des Bismutvanadatpigments in einer wäßrigen, in der Regel 3 bis 50, vorzugsweise etwa 30 gew.-%igen Wasserstoffperoxidlösung auf üblicherweise 50 bis 100°C, insbesondere etwa 95°C, erhitzt.

Dabei empfiehlt es sich, nur einen Teil (etwa die Hälfte) der insgesamt verwendeten Wasserstoffperoxidlösung mit dem Pigment vorzulegen und den restlichen Teil während des Erhitzens zuzutropfen. Insgesamt setzt man üblicherweise 0,2 bis 5 g Wasserstoffperoxidlösung je g Pigment ein.

Nach dieser in der Regel 0,5 bis 3 h in Anspruch nehmenden oxidierenden Behandlung kann das Bismutvanadatpigment auf übliche Weise durch Abfiltrieren, Waschen mit Wasser und Trocknen isoliert werden.

Weiterhin können die erfindungsgemäßen Bismutvanadatpigmente zur Erhöhung ihrer Beständigkeit gegen den Einfluß von Wärme, Licht oder Chemikalien, insbesondere zur Erhöhung ihrer Wetterechtheit, mit einer anorganischen oder auch organischen Schutzhülle überzogen werden, was in bekannter Weise z.B. durch ein- oder mehrstufiges Auffällen von Aluminium-, Titan-, Antimon-, Cer-, Calcium-, Zirkon- oder Siliciumverbindungen, von Zinkphosphat oder Gemischen davon geschehen kann. Diese Schutzhülle macht üblicherweise 2 bis 40, bevorzugt 2 bis 20 und besonders bevorzugt 3 bis 10 Gew.-% des Gesamtpigments aus.

Besonders stabilisierend wirkt eine kombinierte Beschichtung aus Aluminiumhydroxid, Calciumphosphat und Zinkphosphat, die durch aufeinanderfolgendes Auffällen dieser Verbindungen auf die Bismutvanadatpigmente erhalten werden kann.

Die Belegung mit Aluminiumhydroxid kann durch gleichzeitige Zugabe einer Aluminiumsalzlösung, z.B. einer Aluminiumnitratlösung, und einer Natriumcarbonatlösung zur Einstellung eines für die Fällung geeigneten pH-Wertes von etwa 6 bis 6,5 zu einer auf etwa 60 bis 100°C, bevorzugt etwa 80°C, erhitzten, gerührten wäßrigen Pigmentsuspension vorgenommen werden.

Die Belegung mit Calciumphosphat kann durch gleichzeitige Zugabe einer Calciumsalzlösung, z.B. einer Calciumnitratlösung, einer verdünnten Phosphorsäure und einer Natriumcarbonatlösung zur Einstellung eines für die Fällung geeigneten pH-Wertes von etwa 5,5 bis 6 zu der auf etwa 60 bis 100°C, bevorzugt etwa 80°C, erhitzten, gerührten wäßrigen Pigmentsuspension erfolgen.

Die Belegung mit Zinkphosphat kann analog der Belegung mit Calciumphosphat unter Verwendung einer Zinksalzlösung, insbesondere einer Zinknitratlösung, vorgenommen werden.

Nach der Belegung empfiehlt es sich, das Pigment einer weiteren Mahlung zu unterziehen.

Außerdem können die erfindungsgemäßen Pigmente durch Sprühtrocknung einer wäßrigen Suspension in Form staubfreier Feingranulate erhalten werden.

Die erfindungsgemäßen Bismutvanadatpigmente eignen sich hervorragend zum Pigmentieren von polymeren Materialien wie Lacken, Druckfarben und Kunststoffen, wobei sie auch zusammen mit weiteren anorganischen Pigmenten wie Effektpigmenten z.B. auf der Basis von beschichteten Aluminium- oder Glimmerplättchen, organischen Pigmenten oder Farbstoffen zum Einsatz kommen können.

### Beispiele

### A) Herstellung von erfindungsgemäßen Bismutvanadatpigmenten

### Beispiel 1

a) Eine Mischung von 233 g (0,5 mol) Bi₂O₃ und 45,5 g (0,25 mol) V₂O₅ wurde in Gegenwart von 200 g Wasser und 150 g Glasperlen (3 mm Durchmesser) in einem 0,5 l-Kunststoffgefäß 2 h im Red Devil homogenisiert.
   Nach Abtrennung der Glasperlen und Trocknen wurden 70 g der gemahlenen Mischung in einem vorgeheizten Muffelofen bei 770°C calciniert. Nach 1 h bzw. 2 h wurde die Calcinierung unterbrochen, und die Mischung wurde nach schnellem Abkühlen auf Raumtemperatur in einer Schlagmessermühle (Braun Küchenmaschine KM32 mit Mixaufsatz KX32) ca. 5 min gemahlen.
   Nach einer Calcinierungszeit von 5 h wurde das Produkt langsam im Ofen abgekühlt, was etwa 16 h dauerte.
   Eine Mischung von 50 g des erhaltenen rotorangefarbenen Calcinierungsprodukts und 200 ml Wasser wurde dann mit 150 g Glasperlen (0,49-0,7 mm Durchmesser) in einer Perlmühle mit 0,5 l Mahlvolumen 7,25 h bei 700 Upm gemahlen.
   Nach Abfiltrieren der Glaskugeln, Abspülen des anhaftenden Pigments, erneuter Filtration und Waschen mit Aceton wurde ein orangefarbenes Pigment mit einer mittleren Teilchengröße von 1,1 µm (50 % Wert) erhalten.
b) Eine Mischung aus 30 g des gemahlenen Pigments und insgesamt 200 ml 30 gew.-%iger wäßriger Wasserstoffperoxidlösung wurde 2,25 h unter Rückfluß erhitzt. Dabei wurden 100 ml Wasserstoffperoxidlösung vorgelegt, die restlichen 100 ml wurden während des Erhitzens zugetropft.
   Nach Abkühlen auf Raumtemperatur wurde das gereinigte Pigment durch Abfiltrieren isoliert, mit Wasser gewaschen und im Vakuum bei 100°C getrocknet.

Es wurden 27,3 g Bi₄V₂O₁₁ als orangefarbenes Pigment unveränderter Teilchengröße erhalten (Bi: gef. 75,05/ber. 75,05 Gew.-%; V: gef. 9,03/ber. 9,15 Gew.-%).

### Beispiel 2

a) Analog Beispiel 1a) wurde eine Mischung von 163,1 g (0,35 mol) Bi₂O₃ und 45,5 g (0,25 mol) V₂O₅ homogenisiert.
   Die Calcinierung wurde ebenfalls analog Beispiel 1a) vorgenommen, wurde jedoch nur einmal nach 2,5 h unterbrochen.
   Eine Mischung von 60 g des erhaltenen orangefarbenen Calcinierungsprodukts und 200 ml Wasser wurde dann mit 180 g Glasperlen 6,5 h bei 600 Upm gemahlen.
   Es wurde ein gelboranges Pigment mit einer mittleren Teilchengröße von 1,07 µm (50 % Wert) erhalten.
b) 6 g des gemahlenen Pigments wurden dann analog Beispiel 1b) mit 200 ml Wasserstoffperoxidlösung behandelt, jedoch wurde 3 h unter Rückfluß erhitzt.

Nach dieser Behandlung wurden 6 g (Bi₄V₂O₁₁)_{0,4}·(BiVO₄)_{0,6} als leuchtend gelboranges Pigment unveränderter Teilchengröße erhalten (Bi: gef. 69,0/ber. 70,1 Gew.-%; V: gef. 12,4/ber. 12,2 Gew.-%).

### Beispiel 3

Eine Mischung von 1520 g einer wäßrigen Bismutnitratlösung (11 Gew.-% Bismut, 4,9 Gew.-% freie Salpetersäure) und 4 g einer 85 gew.-%igen Phosphorsäure wurde zum Sieden erhitzt. Dann wurden zunächst in 10 min 270 ml 30 gew.-%ige Natronlauge und anschließend in 25 min 461 g einer 13,2 gew.-%igen Natriumvanadatlösung zugegeben (resultierender pH-Wert: 0,9).

Nach einstündigem Rühren bei Siedetemperatur wurde der pH-Wert durch Zugabe von 30 gew.-%iger Natronlauge auf 3 eingestellt, und das Gemisch wurde weitere 2 h bei Siedetemperatur gerührt.

Nach Abkühlen auf Raumtemperatur wurde das Fällungsprodukt abfiltriert, mit Wasser nitratfrei gewaschen und bei 100°C getrocknet.

Es wurden 230 g (Bi₄V₂O₁₁)_{0,6}·(BiVO₄)_{0,4} mit einem Phosphatgehalt von 0,3 Gew.-% erhalten.

200 g des Fällungsprodukts wurden dann im Gemisch mit 250 ml Wasser unter Verwendung von 200 g Glaskugeln (0,49 bis 0,7 mm Durchmesser) in einer Rührwerkskugelmühle mit 0,6 l Mahlvolumen 12 h bei 900 Upm auf eine mittlere Teilchengröße von 0,74 µm (50 % Wert) gemahlen.

60 g des gemahlenen Fällungsprodukts wurden nach Trocknung anschließend 2 h bei 670°C calciniert und dann langsam auf Raumtemperatur abgekühlt (in 9 h auf 200°C).

Das Calcinierungsprodukt wurde anschließend einer erneuten, sechsstündigen Naßmahlung bei 800 Upm auf eine mittlere Teilchengröße von 0,74 µm unterzogen.

Eine Mischung des gemahlenen Calcinierungsprodukts mit 300 ml einer 30 gew.-%igen wäßrigen Wasserstoffperoxidlösung wurde dann 3 h unter Rückfluß erhitzt.

Nach Abkühlen auf Raumtemperatur wurde das gereinigte Pigment abfiltriert, mit Wasser gewaschen und im Vakuum bei 100°C getrocknet.

Es wurden 58 g rotstichig gelbes Pigment erhalten.

Anschließend wurde das Pigment mit einer anorganischen Schutzhülle aus Aluminiumhydroxid, Calciumphosphat und Zinkphosphat versehen.

Dazu wurden 47,5 g des Pigments durch zweistündiges Rühren in 450 ml Wasser dispergiert. Nach Erhitzen auf 80°C wurde eine Lösung von 6,8 g Aluminiumnitratnonahydrat in 44,8 g Wasser in 45 min zugegeben, wobei der pH-Wert der Mischung durch gleichzeitige Zugabe einer 10 gew.-%igen wäßrigen Natriumcarbonatlösung bei 6,0 bis 6,3 gehalten wurde.

Dann wurden parallel eine Lösung von 3,6 g Calciumnitrattetrahydrat in 44,8 g Wasser und eine Lösung von 1,9 g 85 gew.-%iger Phosphorsäure in 44,8 g Wasser in 30 min zugegeben, wobei der pH-Wert durch gleichzeitige Zugabe einer 10 gew.-%igen wäßrigen Natriumcarbonatlösung bei 5,5 bis 6,0 gehalten wurde.

Zinkphosphat wurde analog zu Calciumphosphat unter Verwendung einer Lösung von 5,1 g Zinknitrathexahydrat in 44,8 g Wasser und 2,0 g einer Lösung von 85 gew.-%iger Phosphorsäure in 44,8 g Wasser ausgefällt.

Nach einstündigem Nachrühren bei 80°C wurde das beschichtete Pigment abfiltriert, nitratfrei gewaschen und erneut gemahlen (80 min bei 700 Upm).

Das erhaltene rotstichig gelbe Pigment hatte eine mittlere Teilchengröße von 0,87 µm (50 % Wert).

### Beispiel 4

In 300 ml zum Sieden erhitztes Wasser wurden parallel 141 ml einer wäßrigen Natriumvanadatlösung (6,2 Gew.-% Vanadium), 429 ml einer wäßrigen Bismutnitratlösung (11 Gew.-% Bismut, 4,9 Gew.-% freie Salpetersäure) und eine Lösung von 2,5 g 85 gew.-%iger Phosphorsäure in 50 ml Wasser in 60 min gegeben, wobei der pH-Wert der Mischung durch gleichzeitige Zugabe von 30 gew.-%iger Natronlauge bei 1 gehalten wurde.

Nach 30minütigem Rühren bei Siedetemperatur wurde der pH-Wert durch Zugabe weiterer Natronlauge auf 3,2 eingestellt, und das Gemisch wurde weitere 2 h bei Siedetemperatur gerührt.

Nach Abkühlen auf Raumtemperatur wurde das Fällungsprodukt abfiltriert, mit Wasser nitratfrei gewaschen und analog Beispiel 3 auf eine mittlere Teilchengröße von 0,87 µm (50 % Wert) gemahlen.

Analog Beispiel 3 wurden 80 g des gemahlenen Fällungsprodukts nach Trocknung calciniert, dann erneut gemahlen (0,85 µm 50 % Wert) und mit 250 ml Wasserstoffperoxidlösung behandelt.

Es wurden 75 g (Bi₄V₂O₁₁)_{0,6}·(BiVO₄)_{0,4} mit einem Phosphatgehalt von 0,3 Gew.-% als rotstichig gelbes Pigment erhalten.

Anschließend wurden 47,5 g des Pigments ebenfalls analog Beispiel 3 mit einer anorganischen Schutzhülle belegt.

Nach abschließender Mahlung wurde ein rotstichig gelbes Pigment mit einer mittleren Teilchengröße von 0,87 µm (50 % Wert) erhalten.

### B) Beurteilung der erhaltenen Bismutvanadatpigmente

Zur Beurteilung der coloristischen Eigenschaften wurden Lackierungen untersucht, die folgendermaßen hergestellt wurden: Eine Mischung aus 5 g des jeweiligen Pigments und 20 g Acrylat-Einbrennlack (45 Gew.-% Festkörperanteil) wurde mit 25 g Glaskugeln (1 mm Durchmesser) 60 min mit einem Skandexgerät geschüttelt, dann auf Aluminium-Q-Panels deckend appliziert (200 µm Spiralhandrakel) und bei 130°C 30 min eingebrannt.

Zur Bestimmung der CIELAB-Werte Farbwinkel Hue [°], Chroma C* und Helligkeit L* wurden die erhaltenen Lackierungen mit einem Datacolor 3890 Farbmeßgerät unter Verwendung eines Meßwinkels von 45° und der Normlichtart D65 vermessen.

Die ermittelten Farbwerte sind in der folgenden Tabelle für die Pigmente vor und nach der Wasserstoffperoxidbehandlung (Beispiel 1 und 2) bzw. nach der Belegung mit der anorganischen Schutzhülle (Beispiel 3 und 4) zusammengestellt.

**Tabelle**

| Bsp. | Hue [°] | C* | L* |
|---|---|---|---|
| 1a | 66,2 | 74,7 | 63,9 |
| 1b | 64,8 | 77,0 | 64,1 |
| 2a | 76,6 | 78,2 | 69,4 |
| 2b | 74,3 | 81,4 | 69,7 |
| 3 | 76,4 | 87,7 | 74,6 |
| 4 | 77,9 | 83,4 | 73,8 |

## Patentansprüche

1. Bismutvanadatpigmente der Formel (Bi₄V₂O₁₁)₁₋ₓ·(BiVO₄)ₓ, wobei 0 ≤ x < 0,9 bedeutet, die zusätzlich 0 bis 0,5 Gew.-% Phosphor in Form von Bismutphosphat enthalten und durch einen CIELAB-Farbwinkel von 64 bis 91°, ein Chroma von 72 bis 95 und eine Helligkeit ≥ 62 (Meßwinkel 45°, Normlichtart D65) gekennzeichnet sind.

2. Verfahren zur Herstellung von Bismutvanadatpigmenten gemäß Anspruch 1, dadurch gekennzeichnet, daß man ein homogenes Gemisch von Bismutoxid und Vanadiumoxid 2 bis 12 h bei 600 bis 900°C calciniert und das Calcinierungsprodukt langsam auf Raumtemperatur abkühlt, wobei das Abkühlen bis auf etwa 200°C in mindestens 6 bis 20 h erfolgen soll, einer Mahlung unterwirft und gewünschtenfalls anschließend in wäßriger Suspension mit Peroxoverbindungen behandelt.

3. Verfahren nach Anspruch 2, dadurch gekennzeichnet, daß man die Calcinierung mindestens einmal unterbricht, das Gemisch nach schnellem Abkühlen einer Trockenmahlung unterwirft und die Calcinierung anschließend fortsetzt, wobei die für Abkühlen und Mahlen benötigte Zeit nicht auf die Calcinierungszeit angerechnet wird.

4. Verfahren nach Anspruch 2 oder 3, dadurch gekennzeichnet, daß man das bei der Calcinierung eingesetzte Gemisch von Bismutoxid und Vanadiumoxid durch gemeinsames Vermahlen in wäßriger Suspension herstellt.

5. Verfahren zur Herstellung von Bismutvanadatpigmenten gemäß Anspruch 1, dadurch gekennzeichnet, daß man eine saure Bismutsalzlösung in Gegenwart von gelöstem Phosphat auf bis zu 105°C erhitzt, zunächst 200 bis 400 mol-%, bezogen auf Bismut, Alkalimetallhydroxid in Form einer wäßrigen Lösung und dann eine Vanadatlösung zugibt, nach beendeter Fällung den pH-Wert der Mischung auf 2 bis 6 einstellt, die Mischung 0,5 bis 5 h rührt und danach das ausgefällte Produkt isoliert, salzfrei wäscht, gewünschtenfalls trocknet, mahlt, 0,5 bis 3 h bei 500 bis 800°C calciniert, langsam auf Raumtemperatur abkühlt, wobei das Abkühlen bis auf etwa 200°C in nicht weniger als 6 h erfolgen soll, erneut mahlt und gewünschtenfalls anschließend in wäßriger Suspension mit Peroxoverbindungen behandelt.

6. Verfahren zur Herstellung von Bismutvanadatpigmenten gemäß Anspruch 1, dadurch gekennzeichnet, daß man eine saure Bismutsalzlösung, eine Vanadatlösung und eine Phosphatlösung gleichzeitig in auf bis zu 100°C erhitztes Wasser gibt, den pH-Wert der Mischung dabei mit Alkalimetallhydroxid bei 0,8 bis 3 hält, nach beendeter Fällung den pH-Wert der Mischung auf 2 bis 6 einstellt, die Mischung 0,5 bis 5 h rührt und danach das ausgefällte Produkt isoliert, salzfrei wäscht, gewünschtenfalls trocknet, mahlt, 0,5 bis 3 h bei 500 bis 800°C calciniert, langsam auf Raumtemperatur abkühlt, wobei das Abkühlen bis auf etwa 200°C in nicht weniger als 6 h erfolgen soll, erneut mahlt und gewünschtenfalls anschließend in wäßriger Suspension mit Peroxoverbindungen behandelt.

7. Verfahren nach den Ansprüchen 2 bis 6, dadurch gekennzeichnet, daß man das erhaltene Pigment zusätzlich mit Aluminiumhydroxid, Calciumphosphat und Zinkphosphat belegt.

8. Verwendung von Bismutvanadatpigmenten gemäß Anspruch 1 zum Einfärben von polymeren Systemen.

9. Verwendung von Bismutvanadatpigmenten gemäß Anspruch 1 zum Einfärben von Lacken, Druckfarben und Kunststoffen.

10. Farbige Zubereitungen, enthaltend ein färbbares Material und ein Bismutvanadatpigment gemäß Anspruch 1 als farbgebendes Pigment.
